# EUROPÄISCHE PATENTSCHRIFT

(11) **EP 1 984 865 B1**
(45) Veröffentlichungstag und Bekanntmachung des Hinweises auf die Patenterteilung: **12.08.2015**
(21) Anmeldenummer: 07704310.7
(22) Anmeldetag: 01.02.2007
(51) Int. Cl.: G06F 21/34, G06F 21/35, G06F 21/36, G06F 21/60, G06F 21/72, G06F 21/77

(54) **VERFAHREN ZUR DURCHFÜHRUNG EINES SCHREIBZUGRIFFS, COMPUTERPROGRAMMPRODUKT, COMPUTERSYSTEM UND CHIPKARTE**
METHOD FOR CARRYING OUT A WRITE ACCESS, COMPUTER PROGRAM PRODUCT, COMPUTER SYSTEM AND CHIP CARD
PROCÉDÉ POUR EFFECTUER UN ACCÈS EN ÉCRITURE, PRODUIT-PROGRAMME INFORMATIQUE, SYSTÈME INFORMATIQUE ET CARTE À PUCE

(30) Priorität: 10.02.2006 DE 102006006489
(43) Veröffentlichungstag der Anmeldung: 29.10.2008
(60) Teilanmeldung: 12161810.2
(73) Patentinhaber: Bundesdruckerei GmbH, 10958 Berlin (DE)
(72) Erfinder: BYSZIO-WEGENER, Frank, 16348 Wandlitz (DE); WEISS, Niklas, 12489 Berlin (DE)
(74) Vertreter: Richardt Patentanwälte PartG mbB
(86) Internationale Anmeldenummer: PCT/EP2007/050989
(87) Internationale Veröffentlichungsnummer: WO 2007/090786

(56) Entgegenhaltungen:
- EP-A- 1 280 149
- WO-A-01/79972
- WO-A-2005/036406
- DE-A1- 19 925 389
- US-A1- 2003 070 083
- WOLFGANG RANKL ET AL: 'Handbuch der Chipkarten', [Online] 31 Dezember 2002, MÜNCHEN, Seiten 692 - 709, XP055126319 ISBN: 978-3-44-622036-2

## Beschreibung

Die Erfindung betrifft ein Verfahren zur Durchführung eines Schreibzugriffs auf einen Speicherbereich einer Chipkarte sowie ein Computerprogrammprodukt, ein Computersystem und eine Chipkarte.

Aus dem Stand der Technik sind verschiedene Verfahren zur Sicherung der Datenübertragung zwischen einem Chipkarten-Terminal und einer Chipkarte bekannt. Solche Verfahren werden auch als "Secure Messaging" bezeichnet. Der Zweck der gesicherten Datenübertragung ist die Authentizität und bei Bedarf auch die Vertraulichkeit der übertragenen Daten oder Teile davon sicherzustellen. Vorbekannte Verfahren zur Sicherung der Datenübertragung sind das Authentic-Verfahren und das Combined-Verfahren. Hierzu wird verwiesen auf "Handbuch der Chipkarten", Wolfgang Rankl, Wolfgang Effing, Hansa Verlag, 3. Auflage, 1999, insbesondere Kapitel 6.6, Seite 381 ff.

Die DE 199 25 389 A1 offenbart ein Verfahren und eine Vorrichtung zur Übertragung von Daten auf Smartcards. Die EP 1 280 149 A2 offenbart ein digitales Werkschutzsystem zur Aufnahme und zum Abspielen von digitalen Werken. Die WO 01/79972 A2 offenbart ein Verfahren und ein System zum Bereitstellen und Ausführen von kopiergeschützten digitalen Inhalten. Die US 2003/70083 A1 offenbart ein Verfahren und eine Vorrichtung zur Ver- und Entschlüsselung von Daten auf einem Massenspeichergerät. Die WO 2005/036406 offenbart eine Entschlüsselung bzw. Verschlüsselung bei Schreibzugriffen auf einen Speicher.

Das Handbuch der Chipkarten von Wolfgang Ranckl und Wolfgang Effing offenbart auf den Seiten 694 - 709 in der vierten aktualisierten Auflage die verschlüsselte Übertragung von Zugriffskommandos und zu schreibende Daten auf eine Chipkarte.

Ein gemeinsamer Nachteil vorbekannter Secure-Messaging-Verfahren ist, dass hierdurch nicht sichergestellt werden kann, dass ein Besitzer der Chipkarte eigenmächtig, unbefugt und / oder unbeabsichtigt auf der Chipkarte gespeicherte Daten verändert.

Der Erfindung liegt dem gegenüber die Aufgabe zu Grunde, ein Verfahren zur Durchführung eines Schreibzugriffs zu schaffen sowie ein Computerprogrammprodukt, ein Computersystem und eine Chipkarte.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Durchführung eines Schreibzugriffs auf einen Speicherbereich einer Chipkarte geschaffen, wobei ein kryptographisches Protokoll zur Übertragung eines Zugriffskommandos und / oder der zu schreibenden Daten durchgeführt wird, um diese Daten zu der Chipkarte zu übertragen und dort den Schreibzugriff durchzuführen.

Der kryptographische Schutz des Schreibzugriffs hat den Vorteil, dass dadurch verhindert werden kann, dass auf der Chipkarte gespeicherte Daten versehentlich und / oder ohne die dazu erforderliche Befugnis geändert werden können. Insbesondere kann das erfindungsgemäße Verfahren zum Schutz der Chipkarte gegen Viren und andere Formen der Computersabotage eingesetzt werden. Ein weiteres Anwendungsgebiet sind Zertifizierungsdienste.

Das erfindungsgemäße Verfahren kann grundsätzlich für alle Arten von Chipkarten eingesetzt werden. Unter dem Begriff "Chipkarte" werden hierbei tragbare Datenträger aller Art verstanden, insbesondere sogenannte Speicherkarten,

Mikroprozessorkarten, kontaktbehaftete, kontaktlose und Dual-Interface-Chipkarten sowie sogenannte Smart Cards.

Nach einer Ausführungsform der Erfindung erfolgt der Schreibzugriff auf die Chipkarte von einem externen Computersystem über ein Netzwerk. Bei dem Netzwerk kann es sich um ein öffentliches Computernetzwerk, wie zum Beispiel das Internet handeln.

Nach einer Ausführungsform der Erfindung beziehen sich die zu schreibenden Daten auf ein Zertifikat, einen Schlüssel, ein biometrisches Merkmal und / oder eine persönliche Geheimzahl.

Nach einer Ausführungsform der Erfindung ist das externe Computersystem zur Verfügungstellung von Zertifikat- und Public Key Infrastructure (PKI)-Diensten ausgebildet. Insbesondere kann das Computersystem zur Erbringung von sogenannten Zertifizierungsdiensten dienen, wie sie von einem Zertifizierungsdienste-Anbieter (ZDA) nach dem maßgeblichen Signatur-Gesetz erbracht werden. Durch ein solches Computersystem kann ein zentraler administrativer Schutz geschaffen werden, der eine entsprechende Sicherheit aufweist.

Nach einer Ausführungsform der Erfindung basiert das kryptographische Verfahren zum Schutz des Schreibzugriffs auf einem symmetrischen Schlüssel. Beispielsweise hat die Chipkarte eine Kennung. Diese Kennung kann auf der Chipkarte zum Beispiel aufgedruckt oder eingeprägt sein, so dass sie von einem Benutzer der Chipkarte visuell erfasst werden kann. Für die Durchführung des Schreibzugriffs von einem externen Computersystem steckt der Benutzer die Chipkarte beispielsweise in ein Chipkartenlesegerät seines Personal Computers und überträgt über das Internet die Kennung der Chipkarte zu dem Computersystem.

Das Computersystem hat einen geheimen Schlüssel. Aus diesem geheimen Schlüssel und der Kennung der Chipkarte generiert das Computersystem einen symmetrischen Schlüssel. Dieser symmetrische Schlüssel wird für den kryptographisch geschützten Schreibzugriff auf die Chipkarte verwendet.

Alternativ oder zusätzlich kann die Kennung der Chipkarte auch in einem elektronischen Speicher der Chipkarte gespeichert sein. In diesem Fall braucht der Benutzer die Kennung der Chipkarte nicht manuell in seinem Personal Computer einzugeben, sondern die Kennung kann automatisch ausgelesen werden, um sie zu dem Computersystem zu übertragen. Ferner ist es auch möglich, dass die Kennung nicht fest vorgegeben ist, sondern durch einen Zufallsgenerator der Chipkarte vor einem Schreibzugriff generiert wird.

Nach einer Ausführungsform der Erfindung wird von der Chipkarte an das Computersystem der symmetrische Schlüssel übertragen. Der symmetrische Schlüssel kann beispielsweise in der Chipkarte gespeichert sein oder er wird zum Beispiel durch einen Zufallsgenerator der Chipkarte generiert. Der symmetrische Schlüssel wird erst nach einer Überprüfung der Berechtigung des Computersystems für die Durchführung des Schreibzugriffs an das Computersystem übertragen.

Beispielsweise wird hierzu das Computersystem durch ein kryptographisches Verfahren authentifiziert. Zum Beispiel überträgt das Computersystem das Zertifikat des Zertifizierungsdienste-Anbieters, welcher das Computersystem betreibt, an die Chipkarte. Das Zertifikat beinhaltet insbesondere den öffentlichen Schlüssel des Zertifizierungsdienste-Anbieters.

Nach erfolgreicher Authentifizierung des Computersystems mit Hilfe des Zertifikats verschlüsselt die Chipkarte den symmetrischen Schlüssel mit dem öffentlichen Schlüssels des Zertifizierungsdienste-Anbieters und überträgt den verschlüsselten symmetrischen Schlüssel an das Computersystem. Dies hat den Vorteil, dass die Übertragung des symmetrischen Schlüssels von der Chipkarte an das Computersystem vor Ausspähungen und / oder Manipulationen geschützt ist. Insbesondere bei einer Übertragung des symmetrischen Schlüssels von der Chipkarte zu dem Computersystem über ein ungeschütztes öffentliches Netz ist dies besonders vorteilhaft.

Nach einer Ausführungsform der Erfindung ist auf der Chipkarte ein Schlüsselpaar für ein asymmetrisches Verschlüsselungsverfahren gespeichert, also zum Beispiel ein sogenannter privater und ein öffentlicher Schlüssel, sowie das dazugehörige Zertifikat. Durch einen erfindungsgemäßen Schreibzugriff auf das Zertifikat kann dieses personalisiert, aktualisiert und / oder erweitert werden. Ein solcher Schreibzugriff wird beispielsweise durch einen hierzu autorisierten Zertifizierungsdienste-Anbieter über ein Netzwerk durchgeführt. Dies eröffnet verschiedene Anwendungsmöglichkeiten:
Beispielsweise kann die Chipkarte mit dem Schlüsselpaar und einem anonymisierten Zertifikat geliefert werden. Das Zertifikat beinhaltet also lediglich Angaben zu dem sog. Trust-Center, welches das Schlüsselpaar generiert hat, nicht aber zu dem Träger der Chipkarte. Vorteilhaft ist dabei, dass sich solche Chipkarten mit einem anonymen Zertifikat besonders kostengünstig zur Verfügung stellen lassen, beispielsweise zur Anwendung als sogenannte elektronische Gesundheitskarte.

Mit der Aushändigung der Chipkarte, also zum Beispiel der elektronischen Gesundheitskarte, kann dem Versicherten angeboten werden, zum Beispiel gegen Zahlung einer Gebühr den Funktionsumfang seiner Chipkarte zu erweitern, so dass sie beispielsweise den Anforderungen des maßgeblichen Signaturgesetzes zur Leistung einer rechtsgültigen elektronischen Unterschrift genügt. Hierzu werden mit einem erfindungsgemäßen Verfahren die dazu benötigten Daten in das auf der Chipkarte gespeicherte Zertifikat geschrieben oder dieses Zertifikat durch ein entsprechend ergänztes ersetzt. Durch diesen Schreibzugriff wird das Zertifikat so personalisiert, dass das auf der Chipkarte gespeicherte Schlüsselpaar für einen erweiterten Funktionsumfange genutzt werden kann, wie z.B. für rechtsverbindliche elektronische Signaturen oder dergleichen.

In einem weiteren Anwendungsfall ist das Zertifikat bereits personalisiert. Wenn sich zum Beispiel der Name, die Adresse, Wohnort und / oder der maximal autorisierte Betrag für eine finanzielle Transaktion, für die der Träger der Chipkarte autorisiert ist, oder andere Angaben ändern, kann das Zertifikat durch einen erfindungsgemäßen Schreibzugriff durch das Computersystem des Zertifizierungsdienste-Anbieters über ein Netzwerk entsprechend angepasst werden.

Dies hat insbesondere den Vorteil, dass das auf der Chipkarte gespeicherte Schlüsselpaar weiterhin verwendet werden kann. Dateien, die zuvor mit Hilfe des Schlüsselpaars verschlüsselt oder signiert worden sind, können also weiterhin entschlüsselt bzw. verifiziert werden. Von besonderem Vorteil ist dabei ferner, dass die Chipkarte weiter verwendet werden kann, und nicht durch eine neue ersetzt werden muss. Aufgrund des erfindungsgemäßen Verfahrens kann ferner sichergestellt werden, dass diese Aktualisierung, Modifikation oder Erweiterung des Zertifikats ohne Einschränkungen hinsichtlich der Vertrauenswürdigkeit des Zertifikats erfolgen kann, da ja der Schreibzugriff geschützt erfolgt.

In einem weiteren Aspekt betrifft die Erfindung ein Computerprogrammprodukt zur Durchführung eines erfindungsgemäßen Verfahrens. Bei dem Computerprogrammprodukt kann es sich um ein Computerprogramm handeln, welches von dem Computersystem des Zertifizierungsdienste-Anbieters durchgeführt wird, um dort die entsprechenden Verfahrensschritte umzusetzen, oder um ein Computerprogramm für einen zum Beispiel über das Internet mit dem Computersystem verbundenen Client, also beispielsweise einen Personal Computer des Benutzers der Chipkarte.

In einem weiteren Aspekt betrifft die Erfindung eine Chipkarte, die zur Durchführung eines erfindungsgemäßen Verfahrens ausgebildet ist.

Im Weiteren werden Ausführungsformen der Erfindung mit Bezugnahme auf die Zeichnungen erläutert. Es zeigen:
- Figur 1: ein Blockdiagramm einer Ausführungsform eines erfindungsgemäßen Systems mit einem Computersystem eines Zertifizierungsdiensteanbieters (ZDA) und einer Ausführungsform einer erfindungsgemäßen Chipkarte,
- Figur 2: ein Flussdiagramm einer Ausführungsform eines erfindungsgemäßen Verfahrens.

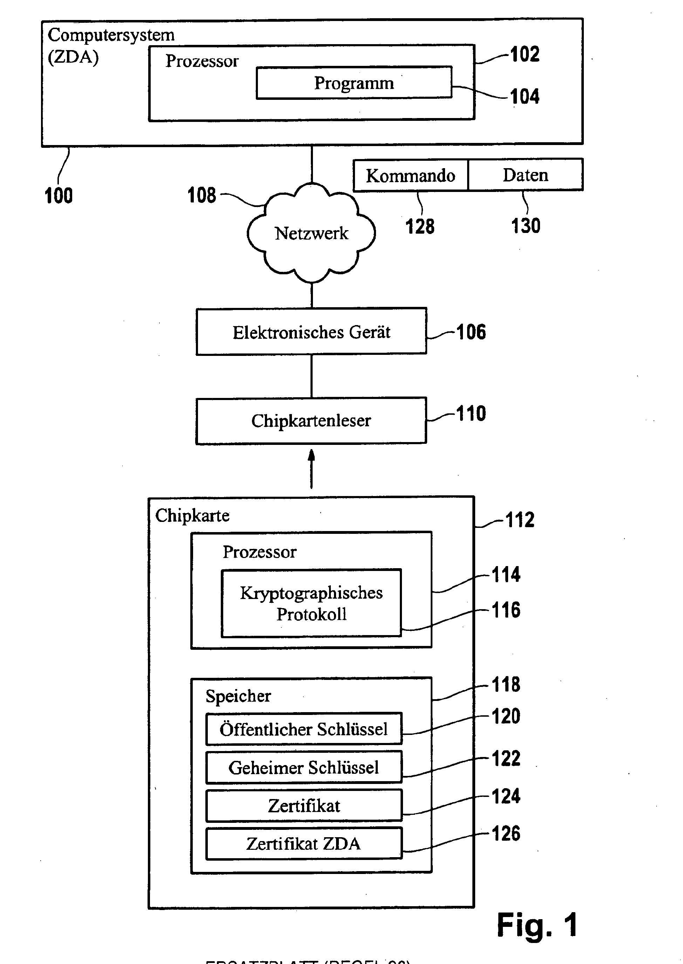

Die Figur 1 zeigt ein Computersystem 100 eines ZDA, wie zum Beispiel eines ZDA nach dem Signatur-Gesetz der Bundesrepublik Deutschland oder eines anderen Landes. Das Computersystem 100 befindet sich in einer Hochsicherheitsumgebung, das heißt einem sogenannten Trust-Center. Das Computersystem 100 hat zumindest einen Prozessor 102 zur Ausführung eines Computerprogramms 104.

Ein elektronisches Gerät 106 kann mit dem Computersystem 100 über ein Netzwerk 108 Daten austauschen. Bei dem elektronischen Gerät 106 kann es sich um einen Personal Computer oder ein anderes Telekommunikationsgerät handeln, welches die Datenübertragung über das Netzwerk 108 ermöglicht, wie zum Beispiel ein Mobilfunkgerät, einen Personal Digital Assistent (PDA), einen Laptop Computer oder dergleichen. Bei dem Netzwerk 108 kann es sich um ein geschütztes Netzwerk, wie zum Beispiel ein Intranet oder ein öffentliches Netzwerk, wie zum Beispiel das Internet, handeln.

An das elektronische Gerät 106 ist ein Chipkarten-Leser 110 angeschlossen. Der Chipkarten-Leser 110 kann integraler Bestandteil des elektronischen Geräts 106 sein oder als separater Chipkarten-Leser ausgeführt sein, der zum Beispiel in einen USB-Port des elektronischen Geräts 106 gesteckt wird. Bei dem Chipkarten-Leser 110 kann es sich z.B. um einen sogenannten Klasse 1, 2 oder 3 Chipkarten-Leser handeln. Je nach der Art der verwendeten Chipkarte 112 kann es sich um einen kontaktbehafteten, kontaktlosen oder Dual-Interface Chipkarten-Leser handeln.

Die Chipkarte 112 hat einen Prozessor 114 zur Ausführung von Instruktionen 116, die unter anderem ein kryptographisches Protokoll implementieren. Die Chipkarte 112 hat ferner einen elektronischen Speicher 118, der zumindest teilweise zugriffsgeschützt ist, um unbeabsichtigte und / oder nicht autorisierte Schreibzugriffe auf dort abgespeicherte Daten und/oder geschützte Speicherbereiche zu vermeiden.

In dem hier betrachteten Ausführungsbeispiel ist ein asymmetrisches Schlüsselpaar bestehend aus einem öffentlichen Schlüssel 120 und einem geheimen Schlüssel 122 in dem Speicher 118 gespeichert. Zu dem Schlüsselpaar gehört ein Zertifikat 124. Das Zertifikat 124 beinhaltet zumindest eine Angabe über den ZDA, der das Schlüsselpaar generiert hat. Das Zertifikat 124 kann anonym oder personalisiert sein. Ferner kann das Zertifikat den Anforderungen an eine rechtswirksame elektronische Signatur nach dem maßstäblichen Signatur-Gesetz erfüllen oder nicht.

Zumindest das Zertifikat 124 und der geheime Schlüssel 122 sind in einem Speicherbereich der Chipkarte 112 gespeichert, der gegen einen Schreibzugriff geschützt ist.

Ferner kann in dem Speicher 118 ein Zertifikat 126 des ZDA gespeichert werden, welches einen öffentlichen Schlüssel des ZDA, das heißt des Computersystems 100, beinhaltet.

In einem ersten Anwendungsfall wird die Chipkarte 112 an deren Benutzer in anonymer, das heißt, nicht personalisierter Form übergeben. Aufgrund dessen ist die Chipkarte 112 nur für bestimmte Funktionen benutzbar, wie zum Beispiel als elektronische Patientenkarte, nicht aber für die rechtswirksame elektronische Signierung von Dokumenten im Rechtsverkehr.

Zur Erweiterung des Funktionsumfangs der Chipkarte 112 kann der Benutzer die Chipkarte 112 in den Chipkarten-Leser 110 einführen, wenn es sich zum Beispiel um eine kontaktbehaftete Chipkarte handelt. Zur Personalisierung des Zertifikats 124 generiert das Computerprogramm 104 ein Kommando 128 mit Daten 130. Bei dem Kommando 128 handelt es sich zum Beispiel um ein Chipkarten-Kommando zur Durchführung eines Schreibzugriffs auf entsprechende Datenfelder des Zertifikats 124, die zur Eintragung von Personalisierungsdaten vorgesehen sind.

Bei den Daten 130 handelt es sich um Personalisierungsdaten, wie zum Beispiel den Namen, die Adresse, den Wohnort, das Geburtsdatum und dergleichen Daten, die aufgrund des Kommandos 128 von der Chipkarte 112 in den entsprechenden Datenfeldern des Zertifikats 124 gespeichert werden sollen. Bevor die Chipkarte 112 einen solchen Schreibzugriff zur Speicherung der Daten 130 erlaubt, muss das kryptographische Protokoll durch die Instruktionen 116 sowie das Computerprogramm 104 erfolgreich abgearbeitet worden sein.

Der kryptographische Schutz kann auf einem symmetrischen Schlüssel basieren. Hierzu kann auf der Chipkarte 112 eine Kennung aufgedruckt oder eingeprägt sein. Diese Kennung liest der Benutzer von der Chipkarte ab und gibt sie in das elektronische Gerät 106 ein, so dass sie zu dem Computersystem 100 übertragen wird. Das Computersystem 100 hat einen weiteren Schlüssel, das heißt einen sogenannten Master Key, mit Hilfe dessen der symmetrische Schlüssel generiert wird.

Bei der Kennung der Chipkarte kann es sich um eine Seriennummer, wie zum Beispiel eine Seriennummer des Prozessors 114 oder der Chipkarte 112 handeln, oder um eine den Hersteller des Prozessors 114 und / oder der Chipkarte 112 identifizierende Kennung und eine solchen Seriennummer, die miteinander verkettet werden. Alternativ oder zusätzlich können auch andere Merkmale der Chipkarte 112 und / oder von deren Komponenten zur Ableitung von zeitlich unveränderlichen eindeutigen Merkmalen verwendet werden, aus denen eine Kennung gewonnen wird. Aus dieser Kennung ermittelt das Computerprogramm 104 mit Hilfe eines geheimen sogenannten Master Keys einen Kartenschlüssel, der als Zugriffsberechtigung zum Beispiel in einem Secure-Messaging-Verfahren für die Chipkarte 112 als Ganzes oder Teile hiervon verwendet wird.

Alternativ oder zusätzlich kann diese Kennung in der Chipkarte 112 gespeichert sein, so dass sie automatisch ausgelesen und von dem elektronischen Gerät 106 an das Computersystem 100 übertragen werden kann. Ferner ist es auch möglich, dass die Kennung durch einen Zufallsgenerator der Chipkarte generiert wird.

In einer weiteren Ausführungsform Ferner wird der symmetrische Schlüssel in der Chipkarte 112 gespeichert oder von dieser generiert. Der symmetrische Schlüssel wird erst dann von der Chipkarte an das Computersystem 100 übertragen, nachdem die entsprechenden Voraussetzungen des kryptographischen Protokolls erfüllt worden sind.

Beispielsweise sendet hierzu das Computersystem 100 über das Netzwerk 108 sein Zertifikat 126 mit einer elektronischen Signatur. Die elektronische Signatur wird durch die Instruktionen 116 verarbeitet und mit Hilfe des öffentlichen Schlüssels des Zertifikats 126 verifiziert. Nach Verifikation des Zertifikats 126 wird der symmetrische Schlüssel von der Chipkarte 112 mit Hilfe des öffentlichen Schlüssels des Zertifikats 126 verschlüsselt und das daraus resultierende Chiffrat wird an das Computersystem 100 über das elektronische Gerät 106 und das Netzwerk 108 übertragen.

Dort wird dieses Chiffrat von dem Computerprogramm 104 mit Hilfe des privaten Schlüssels, der dem Zertifikat 126 zugeordnet ist, entschlüsselt, so dass das Computersystem 100 den symmetrischen Schlüssel erhält. Mit diesem symmetrischen Schlüssel werden das Kommando 128 und / oder die Daten 130 verschlüsselt und in der verschlüsselten Form über das Netzwerk 108 und das elektronische Gerät 106 sowie den Chipkarten-Leser 110 zu der Chipkarte 112 übertragen. Dort werden das Kommando 128 und / oder die Daten 130 mit Hilfe des symmetrischen Schlüssels entschlüsselt und der Schreibzugriff wird gemäß dem Kommando 128 ausgeführt.

In einem weiteren Anwendungsfall ist das Zertifikat 124 bereits personalisiert. Wenn sich personenbezogene Daten des Trägers der Chipkarte 112 ändern, so generiert das Computerprogramm 104 ein dementsprechendes Kommando 128 und Daten 130, um das Zertifikat 124 dementsprechend zu aktualisieren, vorausgesetzt, die o.g. Bedingungen des kryptographischen Protokolls sind für die Durchführung dieses Schreibzugriffs auf das Zertifikat 124 erfüllt.

Neben der Personalisierung, Aktualisierung und / oder Erweiterung des Zertifikats 124 können auch ein oder mehrere Schlüssel der Chipkarte 112 neu gespeichert oder verändert werden; ferner können auch biometrische Merkmale, persönliche Geheimzahlen, Funktionalitäten und / oder Nutzerdaten auf diese Art und Weise gespeichert oder verändert werden.

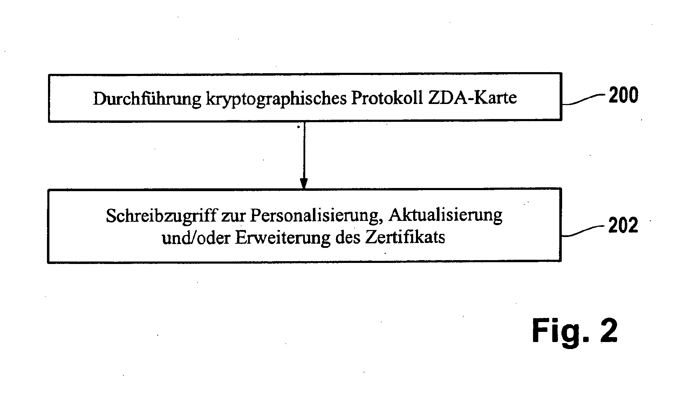

Die Figur 2 zeigt ein entsprechendes Flussdiagramm. In dem Schritt 200 wird ein kryptographisches Protokoll durchgeführt, welches ein Computersystem eines ZDA und eine Chipkarte involviert. Die Chipkarte und das Computersystem können dabei über ein öffentliches Netz, wie zum Beispiel das Internet, miteinander kommunizieren.

Wenn die Bedingungen des kryptographischen Protokolls erfüllt sind, erfolgt in dem Schritt 202 ein Schreibzugriff auf einen Speicherbereich der Chipkarte durch das Computersystem des ZDA, um dort Daten zu speichern, zu aktualisieren oder zu verändern, beispielsweise um neue Funktionen zu ermöglichen und / oder ein Zertifikat zu personalisieren, aktualisieren und / oder zu erweitern.

### Bezugszeichenliste

- 100: Computersystem
- 102: Prozessor
- 104: Computerprogramm
- 106: elektronisches Gerät
- 108: Netzwerk
- 110: Chipkarten-Leser
- 112: Chipkarte
- 114: Prozessor
- 116: Instruktionen
- 118: Speicher
- 120: öffentlicher Schlüssel
- 122: geheimer Schlüssel
- 124: Zertifikat
- 126: Zertifikat
- 128: Kommando
- 130: Daten

## Patentansprüche

1. Verfahren zur Durchführung eines Schreibzugriffs auf einen Speicherbereich einer Chipkarte (112), wobei ein kryptographisches Verfahren zur Übertragung eines Zugriffskommandos (128) und/oder der zu schreibenden Daten (130) zu der Chipkarte durchgeführt wird, wobei das kryptographische Verfahren auf einem symmetrischen Schlüssel basiert, wobei die Chipkarte eine Kennung hat, und die Kennung zu einem Computersystem (100) übertragen wird, wobei das Computersystem (100) aus der Kennung und einem Schlüssel des Computersystems (100) den symmetrischen Schlüssel generiert, **dadurch gekennzeichnet, dass** die Chipkarte kontaktlos, ist, die Kennung der Chipkarte im Klartext auf der Chipkarte durch einen Benutzer visuell erfassbar ist und durch eine Benutzereingabe am Computersystem (100) empfangen wird.

2. Verfahren nach Anspruch 1, wobei der Schreibzugriff von einem externen Computersystem (100) über ein Netzwerk (106) erfolgt.

3. Verfahren nach Anspruch 2, wobei es sich bei dem Netzwerk um ein öffentliches Netzwerk, beispielsweise das Internet handelt.

4. Verfahren nach Anspruch 1, wobei der symmetrische Schlüssel auf oder in der Chipkarte gespeichert ist

5. Verfahren nach Anspruch 3, wobei das Computersystem (100) ein oder mehrere Dienste eines Zertifizierungsdienstanbieters Implementiert, und wobei ein Zertifikat des Zertifizierungsdienstanbieters in der Chipkarte zumindest temporär gespeichert ist, wobei die Chipkarte das Zertifikat des Zertifizierungsdienstanbieters zur Überprüfung der Berichtigung verwendet.

6. Verfahren nach Anspruch 5, wobei ein öffentlicher Schlüssel, der dem Computersystem (100) zugeordnet ist, in der Chipkarte zumindest temporär gespeichert ist, und wobei die Chipkarte die Berichtigung des Computersystems zur Durchführung des Schreibzugriffs mit Hilfe des öffentlichen Schlüssel überprüft.

7. Verfahren nach einem der vorhergehenden Ansprüche, wobei auf der Chipkarte ein Schlüsselpaar (120, 122) zur Durchführung eines asymmetrischen Verschlüsselungsverfahrens und ein Zertifikat (124) für das Schlüsselpaar gespeichert ist.

8. Verfahren nach Anspruch 7, wobei das Zertifikat durch den Schreibzugriff personalisiert wird.

9. Verfahren nach Anspruch 7 oder 8, wobei das Zertifikat durch den Schreibzugriff aktualisiert und/oder erweitert wird.

10. Verfahren nach Anspruch 9, wobei die Aktualisierung und/oder Erweiterung ein oder mehrere der folgenden Angaben des Zertifikats betrifft:
persönliche Daten des Trägers der Chipkarte, wie z. B. Name, Adresse, Wohnort,
ein maximal autorisierte Betrag für die Durchführung einer Finanztransaktion,
eine Eignung der Chipkarte zur Durchführung einer elektronische Signatur.

11. Computerprogrammprodukt mit Programminstruktionen zur Ausführung eines Verfahrens nach einem der vorhergehenden Patenansprüche.

12. Computersystem zur Durchführung eines Schreibzugriffs auf einen Speicherbereich einer Chipkarte (112) mit Mitteln (104) zur Durchführung eines kryptographischen Verfahrens für die Übertragung eines Zugriffskomandos (128) und/oder der zu schreibenden Daten (130) zu der Chipkarte, wobei das kryptographische Verfahren auf einem symmetrischen Schlüssel basiert, wobei die Chipkarte eine Kennung hat, und die Kennung von dem Computersystem (100) empfangen wird, wobei das Computersystem (100) dazu ausgebildet ist, aus der Kennung und einem Schlüssel des Computersystems den symmetrischen Schlüssel zu generieren, **dadurch gekennzeichnet, dass** die Chipkarte kontaktlos ist, die Kennung der Chipkarte (112) durch eine Benutzereingabe empfangbar ist und die Kennung der Chipkarte (112) im Klartext auf der Chipkarte (112) durch einen Benutzer visuell erfassbar ist.

13. Computersystem nach Anspruch 12, wobei die zu schreibenden Daten ein auf der Chipkarte gespeichertes Zertifikat (124) betreffen, welches durch Schreibzugriff personalisiert, aktualisiert und/oder erweitert wird.

14. Chipkarte mit einem Speicherbereich (118) und mit Mitteln (116) zur Ermöglichung eines Schreibzugriffs auf den Speicherbereich unter Verwendung eines kryptographischen Verfahrens, wobei das kryptographische Verfahren auf einem symmetrischen Schlüssel basiert, wobei die Chipkarte eine Kennung hat und der symmetrische Schlüssel durch ein Computersystem (100) aus der Kennung und einem Schlüssel des Computersystems (100) generierbar ist, wobei die Kennung zu einem Computersystem (100) übertragbar ist, **dadurch gekennzeichnet, dass** die Chipkarte kontaktlos ist und dass die Kennung der Chipkarte im Klartext auf der Chipkarte durch einen Benutzer visuell erfassbar ist und die Benutzereingabe am Computersystem (100) empfangbar ist.

## Claims

1. A method for performing an operation of write access to a memory area of a chip card (112), wherein a cryptographic method for transferring to the chip card an access command (128) and/or the data to be written (130) is performed, wherein the cryptographic method is based on a symmetric key, wherein the chip card has an identification and the identification is transferred to a computer system (100), wherein the computer system (100) generates the symmetric key from the identification and a key of the computer system (100), **characterised in that** the chip card is contactless and the identification of the chip card can be visually detected in plain text on the chip card by a user and is received at the computer system (100) by a user input.

2. The method according to Claim 1, wherein the write access is performed from an external computer system (100) via a network (108).

3. The method according to Claim 2, wherein the network is a public network, for example the Internet.

4. The method according to Claim 1, wherein the symmetric key is stored on or in the chip card.

5. The method according to Claim 3, wherein the computer system (100) implements one or more services of a certification service provider, and wherein a certificate of the certification service provider is stored at least temporarily in the chip card, wherein the chip card uses the certificate of the certification service provider to check the authorisation.

6. The method according to Claim 5, wherein a public key which is associated with the computer system (100) is stored in the chip card at least temporarily, and wherein the chip card, with the aid of the public key, checks the authorisation of the computer system to carry out the write access.

7. The method according to one of the preceding claims, wherein a key pair (120, 122) for carrying out an asymmetric encryption method and a certificate (124) for the key pair are stored on the chip card.

8. A method according to Claim 7, wherein the certificate is personalised by the write access.

9. The method according to Claim 7 or 8, wherein the certificate is updated and/or expanded by the write access.

10. The method according to Claim 9, wherein the updating and/or expansion concerns one or more of the following details of the certificate:
personal data of the carrier of the chip card, such as name, address, place of residence,
a maximum authorised value for carrying out a financial transaction,
a suitability of the chip card for performing an electronic signature.

11. A computer program product having program instructions for carrying out a method according to one of the preceding claims.

12. A computer system for carrying out an operation of write access to a memory area of a chip card (112) comprising means (104) for carrying out a cryptographic method for transferring to the chip card an access command (128) and/or data to be written (130), wherein the cryptographic method is based on a symmetric key, wherein the chip card has an identification and the identification is received by the computer system (100), wherein the computer system (100) is configured to generate the symmetric key from the identification and a key of the computer system, **characterised in that** the chip card is contactless, the identification of the chip card (112) can be received by a user input, and the identification of the chip card (112) can be visually detected in plain text on the chip card (112) by a user.

13. The computer system according to Claim 12, wherein the data to be written concerns a certificate (124) stored on the chip card, which certificate is personalised, updated and/or expanded by write access.

14. A chip card comprising a memory area (118) and comprising means (116) for enabling write access to the memory area with use of a cryptographic method, wherein the cryptographic method is based on a symmetric key, wherein the chip card has an identification and the symmetric key can be generated by a computer system (100) from the identification and a key of the computer system (100), wherein the identification can be transferred to a computer system (100), **characterised in that** the chip card is contactless, and **in that** the identification of the chip card can be visually detected in plain text on the chip card by a user, and the user input can be received at the computer system (100).

## Revendications

1. Procédé pour l'exécution d'un accès en écriture sur une zone de stockage d'une carte à puce (112), dans lequel un procédé cryptographique pour le transfert d'une commande d'accès (128) et/ou pour des données (130) devant être écrites est exécuté sur la carte à puce, dans lequel le procédé cryptographique est basé sur une clé symétrique, dans lequel la carte à puce a une identification, et l'identification est transmise à un système informatique (100), dans lequel le système informatique (100) génère la clé symétrique à partir de l'identification et d'une clé du système informatique (100), **caractérisé en ce que** la carte à puce est sans contact, l'identification de la carte à puce peut être saisie visuellement par un utilisateur en clair sur la carte à puce et est réceptionnée par une entrée d'utilisateur sur le système informatique (100).

2. Procédé selon la revendication 1, dans lequel l'accès en écriture est effectué par un système informatique (100) externe par l'intermédiaire d'un réseau (108).

3. Procédé selon la revendication 2, dans lequel il s'agit d'un réseau public, par exemple internet, dans le cas du réseau.

4. Procédé selon la revendication 1, dans lequel la clé symétrique est stockée sur ou dans la carte à puce.

5. Procédé selon la revendication 3, dans lequel le système informatique (100) met en oeuvre un ou plusieurs services d'un prestataire de services de certification, et dans lequel un certificat du prestataire de services de certification est stocké au moins temporairement dans la carte à puce, dans lequel la carte à puce emploie le certificat du prestataire de services de certification pour la vérification de la correction.

6. Procédé selon la revendication 5, dans lequel une clé publique, qui est associée au système informatique (100), est stockée au moins temporairement dans la carte à puce, et dans lequel la carte à puce vérifie la correction du système informatique pour l'exécution de l'accès en écriture à l'aide de la clé publique.

7. Procédé selon l'une des revendications précédentes, dans lequel une paire de clés (120, 122) et un certificat (124) pour la paire de clés sont stockés sur la carte à puce pour l'exécution d'un procédé de cryptage asymétrique.

8. Procédé selon la revendication 7, dans lequel le certificat est personnalisé par l'accès en écriture.

9. Procédé selon les revendications 7 ou 8, dans lequel le certificat est actualisé par l'accès en écriture et/ou est étendu.

10. Procédé selon la revendication 9, dans lequel l'actualisation, et/ou l'extension concerne une ou plusieurs des indications du certificat suivantes :
les données personnelles du porteur de la carte à puce, comme, par exemple, le nom, l'adresse, le lieu de résidence,
un montant maximal autorisé pour l'exécution d'une transaction financière,
une aptitude de la carte à puce pour l'exécution d'une signature électronique.

11. Produit de programme d'ordinateur avec des instructions de programme pour l'exécution d'un procédé selon l'une des revendications précédentes.

12. Système informatique pour l'exécution d'un accès en écriture sur une zone de stockage d'une carte à puce (112) avec des moyens (104) pour l'exécution d'un procédé cryptographique pour le transfert d'une commande d'accès (128) et/ou des données (130) devant être écrites sur la carte à puce, dans lequel le procédé cryptographique est basé sur une clé symétrique, dans lequel la carte à puce a une identification, et l'identification est réceptionnée par le système informatique (100), dans lequel le système informatique (100) est conçu pour générer la clé symétrique à partir de l'identification et d'une clé du système informatique, **caractérisé en ce que** la carte à puce est sans contact, l'identification de la carte à puce (112) peut être réceptionnée par une entrée d'utilisateur et l'identification de la carte à puce (112) en clair sur la carte à puce (112) est visuellement saisie par un utilisateur.

13. Système informatique selon la revendication 12, dans lequel les données à écrire concernent un certificat (124) stocké sur une carte à puce, lequel est personnalisé, actualisé et/ ou étendu par l'accès en écriture.

14. Carte à puce avec une zone de stockage (118) et des moyens (116) pour permettre un accès en écriture sur une zone de stockage moyennant l'emploi d'un procédé cryptographique, où le procédé cryptographique est basé sur une clé symétrique, où la carte à puce a une identification et la clé symétrique peut être générée à partir de l'identification et d'une clé du système informatique (100), où l'identification peut être transmise vers un système informatique (100), **caractérisée en ce que** la carte à puce est sans contact et que l'identification de la carte à puce peut être saisie visuellement en clair sur la carte à puce par un utilisateur et l'entrée d'utilisateur peut être réceptionnée sur le système informatique (100).
